# EUROPÄISCHE PATENTSCHRIFT

(11) **EP 2 837 544 B1**
(45) Veröffentlichungstag und Bekanntmachung des Hinweises auf die Patenterteilung: **01.11.2017**
(21) Anmeldenummer: 14177412.5
(22) Anmeldetag: 17.07.2014
(51) Int. Cl.: B62B 3/00, B62B 3/02, B62B 5/08

(54) **Handwagen mit verkleinerbarem Packmaß**
Trolley with reducible pack size
Charrette de dimension réductible

(30) Priorität: 14.08.2013 DE 102013108806
(43) Veröffentlichungstag der Anmeldung: 18.02.2015
(73) Patentinhaber: Puky GmbH & Co, KG, 42489 Wülfrath (DE)
(72) Erfinder: Rao, Joachim, 42651 Solingen (DE)
(74) Vertreter: Kluin, Jörg-Eden

(56) Entgegenhaltungen:
- EP-A1- 2 151 365
- EP-A2- 2 371 231
- WO-A2-02/36409
- WO-A2-2006/031101
- DE-A1- 19 630 483
- DE-U1- 8 536 218
- US-A- 5 123 665

## Beschreibung

Die Erfindung betrifft einen Handwagen mit verkleinerbarem Packmaß. Handwägen, beispielsweise Bollerwägen, Leiterwägen oder dergleichen mit verkleinerbarem Packmaß sind bereits bekannt. Beispielsweise zeigt die DE 101 39 357 einen klappbaren Bollerwagen. Nachteilig an bekannten Handwägen mit verkleinerbarem Packmaß ist, dass ihre Herstellung und ihre Bedienung oft aufwendig sind. Aus der DE G 85 36 218.2 ist ein Handwagen mit verkleinerbarem Packmaß bekannt, bei dem ein vorderer Oberrahmen ausschließlich durch eine rotatorische Bewegung um eine vordere Schwenkachse auf den Unterrahmen zu bewegbar ist.

Aus der WO 2006/031101 A2 ist ein Handwagen bekannt, bei dem U-förmige Rahmenteile über im mittleren Bereich des Wagens angeordnete Gelenke schwenkbar miteinander verbunden sind. Aus der EP 2 151 365 A1 ist ein Handwagen bekannt, bei dem der Oberrahmen translatorisch auf eine Bodenplatte zu bewegbar ist.

Die DE 196 30 483 A1 zeigt einen Handwagen, mit einer oben umlaufenden Rohrrahmenkonstruktion, die ebenfalls translatorisch auf eine Bodenplatte zu bewegbar ist.

Die Erfindung hat es sich zur Aufgabe gemacht, einen Handwagen mit verkleinerbarem Packmaß zu schaffen, der hinsichtlich zumindest eines der genannten Nachteile verbessert ist.

Diese Aufgabe wird durch den in Anspruch 1 wiedergegebenen Handwagen gelöst.

Der erfindungsgemäße Handwagen mit verkleinerbarem Packmaß eignet sich insbesondere zum Transport von Kindern. Er weist eine Vorderachsanordnung und eine Hinterachsanordnung auf. Es ist ein Oberrahmen und ein Unterrahmen sowie eine zwischen diesen Rahmen angeordnete Wandung vorgesehen. Das Packmaß ist dadurch verkleinerbar, dass der Oberrahmen auf den Unterrahmen zu bewegbar ist.

Es hat sich gezeigt, dass auf diese Weise ein Handwagen geschaffen ist, dessen Packmaß von dem Nutzer leicht verkleinerbar ist.

Die Wandung umfasst eine Bespannung oder ist durch eine Bespannung gebildet.

Die Bespannung ist zwischen dem Oberrahmen und dem Unterrahmen spannbar. Bevorzugt ist die Bespannung stramm spannbar. Es ist jedoch auch denkbar, dass sie lediglich locker spannbar ist.

Die Bespannung umfasst bevorzugt ein Element, welches im nicht gespannten Zustand biegeschlaff ist oder ist durch ein derartiges Element gebildet.

Die Bespannung ist im Betriebszustand bevorzugt gespannt.

Die Bespannung kann beispielsweise Stoff, Folie, Gitter, Netz, Gurte oder dergleichen umfassen oder hieraus gebildet sein. Bevorzugt ist sie ein textiler Stoff oder ein textiler Bezug. Die Bespannung bildet bevorzugt die Seitenwandungen des Handwagens.

Bevorzugt ist in dem Wagen mindestens ein Sitz für ein Kind vorgesehen.

Es ist denkbar, dass der Oberrahmen zumindest auch durch eine translatorische Bewegung auf den Unterrahmen zu bewegbar ist. Der Oberrahmen ist jedoch ausschließlich durch eine rotatorische Bewegung auf den Unterrahmen zu bewegbar, also auf den Unterrahmen zu verschwenkbar.

Mit Vorteil stellt der Unterrahmen die gesamte Stabilität bereit. Er erfüllt also bevorzugt zwei Funktionen, nämlich zum einen das Aufspannen der Bespannung und zum anderen das Bereitstellen der Stabilität. Vorzugsweise sind an dem Unterrahmen die Vorderachsanordnung und die Hinterachsanordnung befestigt.

Der Oberrahmen und bevorzugt auch der Unterrahmen umfassen jeweils eine zumindest nahezu geschlossene Rohrschleife. In einer Ausführungsform ist der Oberrahmen und bevorzugt auch der Unterrahmen durch genau eine zumindest nahezu geschlossene Rohrschleife gebildet.

Die Rohrschleifen sind bevorzugt nicht kreisförmig, sondern weisen bevorzugt jeweils einen vorderen Querbereich und einen hinteren Querbereich auf.

Mit Vorteil verläuft die Schwenkachse, um die der Oberrahmen auf den Unterrahmen zu verschwenkbar ist, horizontal.

Die Schwenkachse verläuft bevorzugt quer zur Längsrichtung des Handwagens. Sie ist an der Vorderseite des Handwagens angeordnet. Der Oberrahmen ist an dem Unterrahmen bevorzugt mithilfe eines Gelenkstücks befestigt, welches weiter bevorzugt im vorderen Querbereich des Unterrahmens angeordnet ist. Anders ausgedrückt ist vorzugsweise mithilfe eines im vorderen Querbereich des Unterrahmens angeordneten Gelenkstücks oberhalb des Unterrahmens der Oberrahmen befestigt und der Oberrahmen ist bevorzugt relativ zu dem Unterrahmen um eine horizontale Schwenkachse verschwenkbar, die durch das Gelenkstück verläuft.

Der Oberrahmen und der Unterrahmen weisen im Betriebszustand bevorzugt etwa horizontal verlaufende Bereiche auf.

Mit Vorteil ist eine Stütze vorgesehen, die den Oberrahmen in der Betriebsstellung des Handwagens in dem vorgesehen Abstand zu dem Unterrahmen fixiert.

Besonders bevorzugt ist die Stütze in sich klappbar, beispielsweise kniegelenkig.

Es ist jedoch auch denkbar, dass die Stütze nicht kniegelenkig ist.

Ganz besonders bevorzugt ist der Oberrahmen an seinem hinteren Querbereich mittels einer kniegelenkigen Stütze mittelbar oder unmittelbar an dem Unterrahmen abstützbar. Bevorzugt ist der Oberrahmen an dem Unterrahmen mittels dieser Stütze auch befestigt.

In der Ausführungsform der mittelbaren Befestigung erfolgt diese bevorzugt über eine mit dem Unterrahmen befestigte Bodenplatte.

In der gestreckten Position (allgemein ausgedrückt: Betriebsposition) der Stütze ist der hintere Teil des Oberrahmens bevorzugt beabstandet von dem Unterrahmen (Betriebsstellung des Handwagens). In der abgewinkelten Position (allgemein ausgedrückt: Verstauposition) der Stütze liegt der hintere Teil des Oberrahmens bevorzugt zumindest nahezu an dem Unterrahmen an (Verstaustellung des Handwagens).

Die Stütze ist bevorzugt in ihrer Betriebsposition arretierbar. Bevorzugt ist sie auch in ihrer Verstauposition arretierbar.

In der Verstauposition bietet die Stütze bevorzugt eine Unterfassmöglichkeit zum Tragen des Handwagens.

Mit Vorteil ist die Stütze zum einen ein Fixierelement, indem sie, wie beschrieben, den Oberrahmen in ihrer gestreckten Position von dem Unterrahmen beabstandet.

In der Ausführungsform, in der die Wandung des Handwagens eine Bespannung umfasst, ist sie besonders bevorzugt zudem ein Spannelement, indem sie die vorgesehene Beabstandung des Oberrahmens von dem Unterrahmen unter Spannung der Bespannung erleichtert oder ermöglicht.

Vorzugsweise ist in dem Wagen ein Sitz für Kinder mit einer Sitzfläche vorgesehen und die Stütze dient besonders bevorzugt gleichzeitig als Lehne des Sitzes.

Genauer gesagt ist an dem Unterrahmen mit Vorteil eine Bodenplatte befestigt und weiter bevorzugt ist im hinteren Bereich der Bodenplatte eine erhabene Sitzfläche vorgesehen, die besonders bevorzugt an die Stütze angrenzt und die Stütze bildet vorzugsweise eine Rückenlehne.

Zur Erhöhung des Sitzkomforts weist der Sitz bevorzugt Sitzpolster auf, die vorzugsweise abnehmbar sind.

Der Handwagen weist bevorzugt Gurte auf, zum Sichern eines Kindes. Diese Sicherungsgurte sind besonders bevorzugt abnehmbar.

Mit Vorteil sind im Bereich der Sitzfläche Schlitze in der Bodenplatte vorgesehen, durch die vorzugsweise Sicherungsgurte hindurchführbar sind, die besonders bevorzugt Schlaufen aufweisen und ganz besonders bevorzugt mithilfe von in die Schlaufen reversibel einführbaren Elementen gegen Herausziehen gesichert sind. Die Elemente können aus Kunststoff gefertigt sein.

Zum Abnehmen der Sicherungsgurte sind die Elemente aus den Schlaufen entfernbar und die Schlaufen aus den Schlitzen herausziehbar. Zum Anbringen der Sicherungsgurte kann umgekehrt vorgegangen werden.

In der Ausführungsform, in der die Wandung des Handwagens eine Bespannung umfasst, weist diese mit Vorteil Schlaufen auf, mittels derer sie an dem Oberrahmen und/oder an dem Unterrahmen befestigt ist. Es hat sich gezeigt, dass hierdurch eine für Handwagen besonders geeignete, da optisch ansprechende und belastbare Verbindung zwischen der Bespannung und dem oder den Rahmen erzielbar ist.

Es ist denkbar, dass die Bespannung auch mittels Spannbändern, die insbesondere unterhalb der Bodenplatte verlaufen, gespannt oder befestigt ist.

In einer Ausführungsform ist im vorderen Bereich des Oberrahmens eine Tasche lösbar befestigbar.

Der Handwagen weist bevorzugt vier Räder auf.

Mit Vorteil ist eine (bevorzugt Vorderrad-) Achsschenkellenkung vorgesehen.

Der Oberrahmen ist bevorzugt mit dem Unterrahmen unlösbar verbunden.

Die Hinterräder sind bevorzugt ungelenkt und bevorzugt umfasst die Hinterachsanordnung eine durchgehende Hinterachse.

Vorzugsweise umfasst die Vorderachsanordnung einen durchgehenden Vorderachsenträger.

Mit Vorteil ist eine Feststellbremse vorgesehen. Diese umfasst bevorzugt ein einseitig vorstehendes Betätigungselement, welches vorzugsweise mit einem federbeaufschlagten Arretiermechanismus zusammenwirkt, der bevorzugt Stifte umfasst, die beim Auslösen der Bremse federkraftbeaufschlagt in mit Vorteil auf der Innenseite der Hinterräder vorgesehene Vertiefungen einrasten.

Das Betätigungselement der Feststellbremse ist bevorzugt mit dem Fuß betätigbar.

Mit Vorteil sind außer dem Unterrahmen, der Bodenplatte und etwaigen, diese unterstützenden Elementen (wie beispielsweise eine Traverse) und den Achsanordnungen sowie den Rädern keine weiteren, die Gewichtskraft des Kindes (und/oder der Nutzlast) tragende Teile vorgesehen.

Die Bodenplatte ist mit Vorteil quer in eine vordere und eine hintere Bodenplatte geteilt. An der Stoßkante der beiden Teile der Bodenplatte ist bevorzugt eine Traverse an dem Unterrahmen vorgesehen.

Mit Vorteil weist der Unterrahmen einen zumindest in etwa horizontalen Bereich auf.

Vorzugsweise weist der Oberrahmen einen im Betriebsstellung zumindest nahezu horizontalen Bereich auf.

Die Schwenkachse, um die der Oberrahmen auf den Unterrahmen zu rotierbar ist, ist bevorzugt weder in etwa auf der Höhe des zumindest nahezu horizontalen Bereichs des Unterrahmens, noch in etwa auf der Höhe des in Betriebsstellung zumindest nahezu horizontalen Bereichs des Oberrahmens angeordnet, sondern zwischen diesen Bereichen, bevorzugt etwa mittig.

In der Betriebsstellung steht der an die Schwenkachse angrenzende Bereich des Oberrahmens bevorzugt nicht senkrecht, sondern weist einen Winkel a zur Horizontalen auf, der zwischen 25 und 65 Grad liegt und bevorzugt etwa 45 Grad beträgt.

Mit Vorteil verläuft der Oberrahmen nicht in einer Ebene, sondern weist, von der Seite betrachtet, zumindest eine Krümmung auf.

Vorzugsweise verläuft der Oberrahmen in dem an die Schwenkachse angrenzenden Bereich bis zu einer ersten Krümmung und weist danach, von der Seite betrachtet, eine leichte Wölbung auf. Sowohl die Krümmung als auch die Wölbung sind bevorzugt in Richtung des Unterrahmens ausgeführt.

Auf diese Weise wird erreicht, dass, wie bevorzugt der Aufbau des Handwagens über einen großen Bereich eine ausreichende Höhe aufweist und gleichzeitig, durch die Rotation des Oberrahmens auf den Unterrahmen zu, eine erhebliche Verringerung der Maximalhöhe erreicht wird. Zudem wird, wie bevorzugt, erreicht, dass im hinteren Bereich des Wagens, in dem bevorzugt der Sitz angeordnet ist, in Betriebsstellung die größte Höhe erreicht wird.

Mit Vorteil ist das Verhältnis der Länge des in Betriebsstellung zumindest nahezu horizontalen Bereichs des Oberrahmens zu der Gesamtlänge des Aufbaus größer als einhalb und beträgt bevorzugt etwa fünf zu sechs.

Das Verhältnis der Maximalhöhe des Aufbaus des Handwagens in Verstaustellung zu der Maximalhöhe des Aufbaus des Handwagens in Betriebsstellung ist bevorzugt kleiner als vier zu fünf und beträgt bevorzugt in etwa drei zu fünf.

Die Erfindung wird nun anhand eines in den Zeichnungen gezeigten Ausführungsbeispiels näher erläutert. Es zeigen:
- Fig. 1: eine perspektivische Darstellung des Handwagens in Betriebsstellung mit Blick von schräg unten;

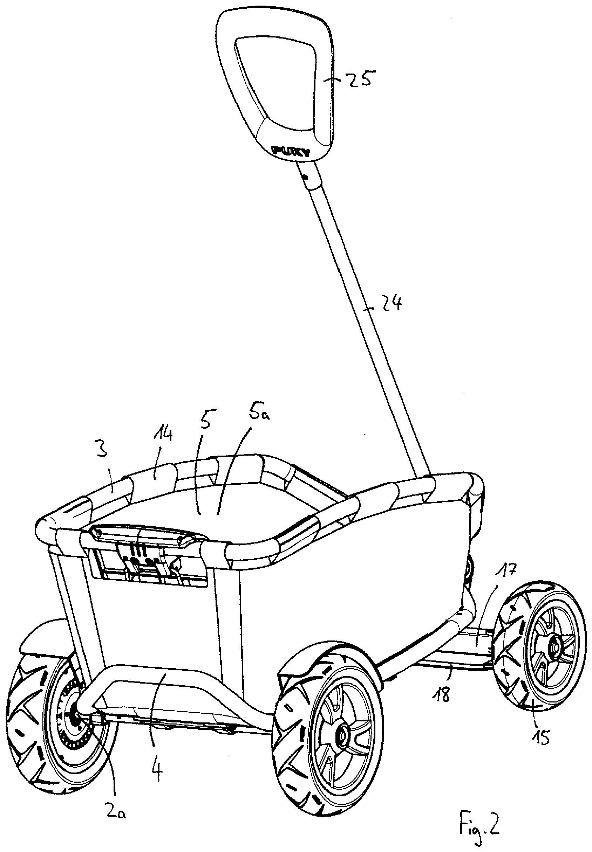

- Fig. 2: eine perspektivische Darstellung des in Fig. 1 gezeigten Handwagens mit Blick von schräg oben;
- Fig. 3: eine perspektivische Darstellung des in Fig. 1 gezeigten Handwagens mit Blick von schräg vorne;
- Fig. 4: eine perspektivische Darstellung der Gelenkstückkappe;
- Fig. 5: eine perspektivische Darstellung des Gelenkstücks;
- Fig. 6: eine perspektivische Darstellung des Oberrahmens;
- Fig. 7: eine perspektivische Darstellung des Unterrahmens;
- Fig. 8: eine Seitendarstellung von Unterrahmen, Gelenkstück und Oberrahmen in Betriebsstellung;
- Fig. 9: eine Seitendarstellung von Unterrahmen, Gelenkstück und Oberrahmen in Verstaustellung;
- Fig. 10: eine perspektivische Darstellung der vorderen Hälfte der Bodenplatte;
- Fig. 11: eine perspektivische Darstellung der hinteren Hälfte der Bodenplatte;
- Fig. 12: eine perspektivische Darstellung der unteren Hälfte der Rückenlehne;
- Fig. 13: eine perspektivische Darstellung der oberen Hälfte der Rückenlehne;
- Fig. 14: eine perspektivische Darstellung der Scharnierkappe der Rückenlehne;
- Fig. 15: eine perspektivische Darstellung des Handwagens in Verstaustellung, mit Blick von oben;

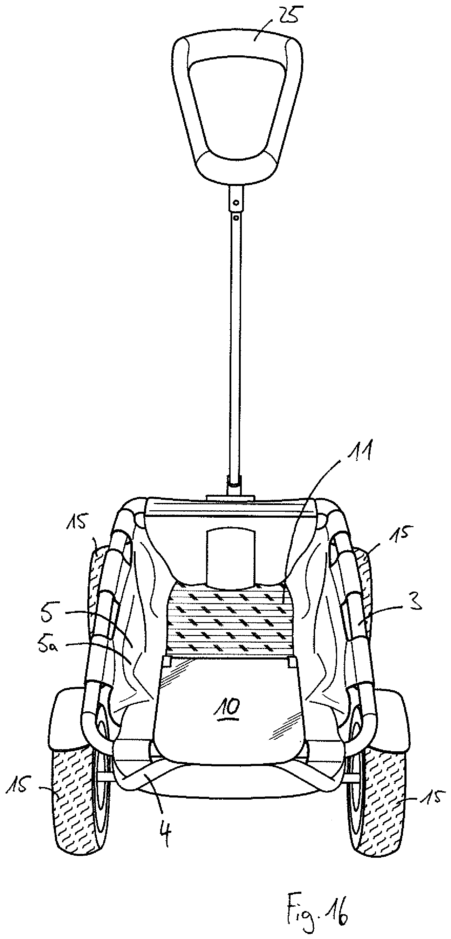

- Fig. 16: eine perspektivische Darstellung des in Fig. 15 gezeigten Handwagens mit Blick von schräg hinten;
- Fig. 17: eine perspektivische Darstellung des in Fig. 15 gezeigten Handwagens mit Blick von schräg vorne;
- Fig. 18: eine perspektivische Darstellung eines Abstandsbegrenzers der Deichsel;
- Fig. 19: eine Schnittdarstellung des in Fig. 18 gezeigten Abstandsbegrenzers;
- Fig. 20: eine perspektivische Darstellung eines Abstandsbegrenzers der Achsschen kel;
- Fig. 21: eine Ansicht von oben oder unten auf den in Fig. 20 gezeigten Abstandsbegrenzer.

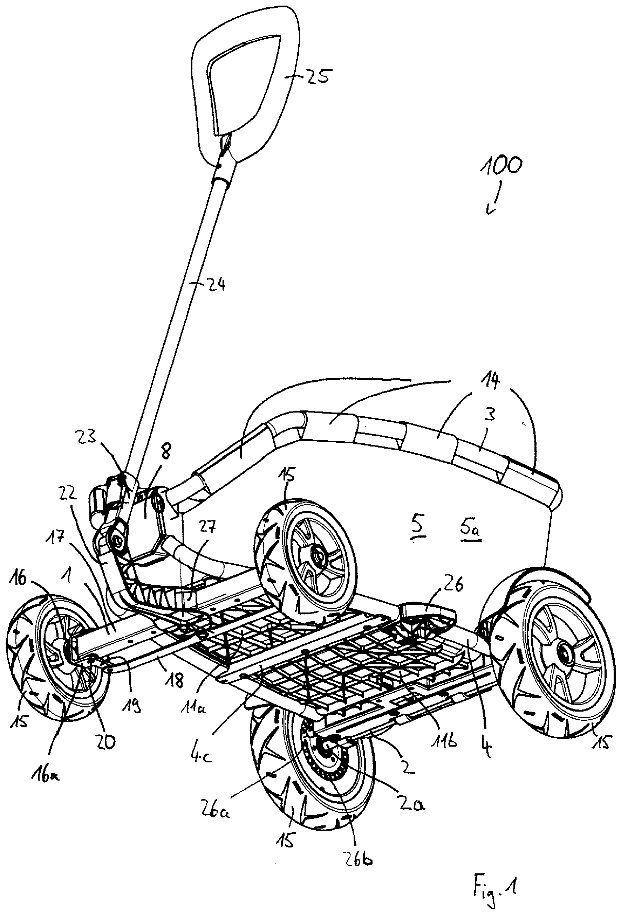

Wie etwa Fig. 1 zeigt, weist das als Ganzes mit 100 bezeichnete gezeigte Ausführungsbeispiel des Handwagens vier Räder 15 auf, einen Oberrahmen 3 sowie einen Unterrahmen 4 und eine zwischen dem Oberrahmen 3 und dem Unterrahmen 4 angeordnete Wandung 5. Die Wandung 5 ist in dem gezeigten Ausführungsbeispiel durch eine spannbare Bespannung 5a gebildet.

Die Hinterachsanordnung 2 umfasst eine durchgehende Hinterachse 2b. Die Vorderachsanordnung 1 umfasst einen durchgehenden Vorderachsenträger 17, an dem die beiden Vorderachsen 16 der beiden Vorderräder 15 jeweils mittels eines Lenklagers 20 gelagert sind. Die Lenkung erfolgt mithilfe von mit den Vorderachsen verbundenen Lenkhebeln 19, die über eine Spurstange 18 von der Deichsel 22 angelenkt werden. Der gezeigte Handwagen weist also eine Achsschenkellenkung auf, die, verglichen mit einer Drehschemellenkung, die Gefahr des Kippens des Handwagens bei kleinen Kurvenradien deutlich verringert.

Fig. 1 zeigt auch, dass an dem Unterrahmen 4 die Vorderachsanordnung 1 und die Hinterachsanordnung 2 befestigt sind, sodass der Unterrahmen 4 die gesamte Stabilität des Handwagens 100 bereitstellt.

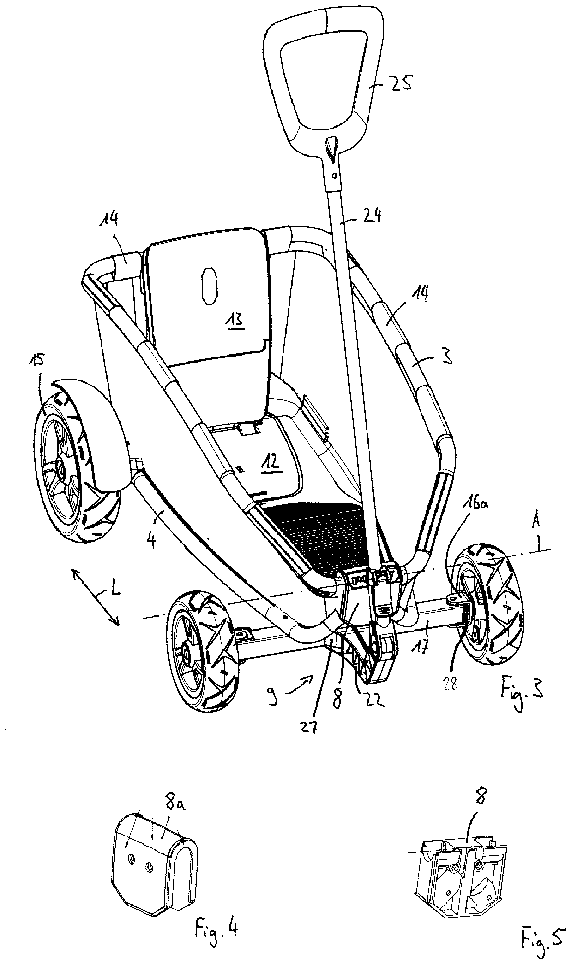

Fig. 5 zeigt das im gezeigten Ausführungsbeispiel aus Kunststoff gefertigte Gelenkstück 8, Fig. 4 die dazugehörige Kappe 8a, aus dem gleichen Material.

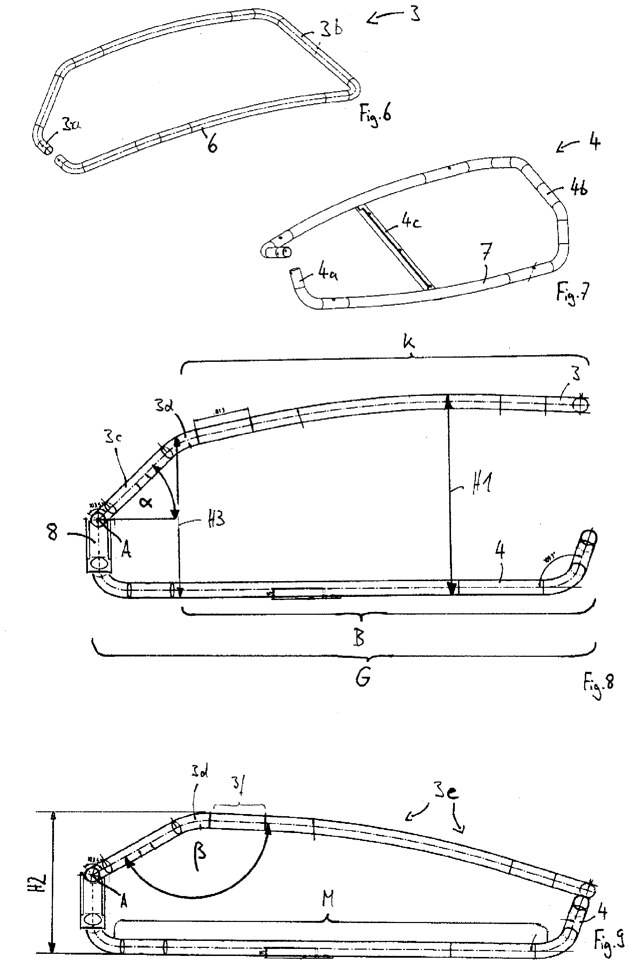

Wie die Figuren 6 und 7 zeigen, ist der Oberrahmen 3 und der Unterrahmen 4 jeweils aus einer Rohrschleife 6, 7 gebildet, die nahezu geschlossen ist. Die Rohrschleifen sind dabei nicht kreisförmig, sondern weisen einen vorderen Querbereich 3a, 4a und einen hinteren Querbereich 3b, 4b auf.

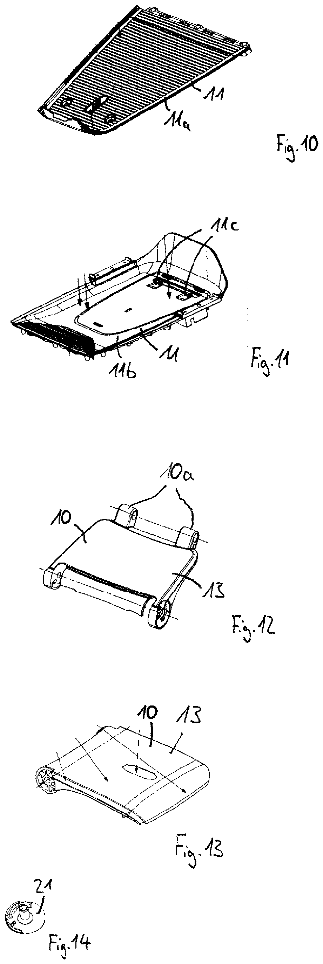

Wie die Figuren 10 und 11 zeigen, ist eine quergeteilte Bodenplatte vorgesehen, deren Stoßkante von einer an dem Unterrahmen angeordneten Traverse 4c unterstützt ist.

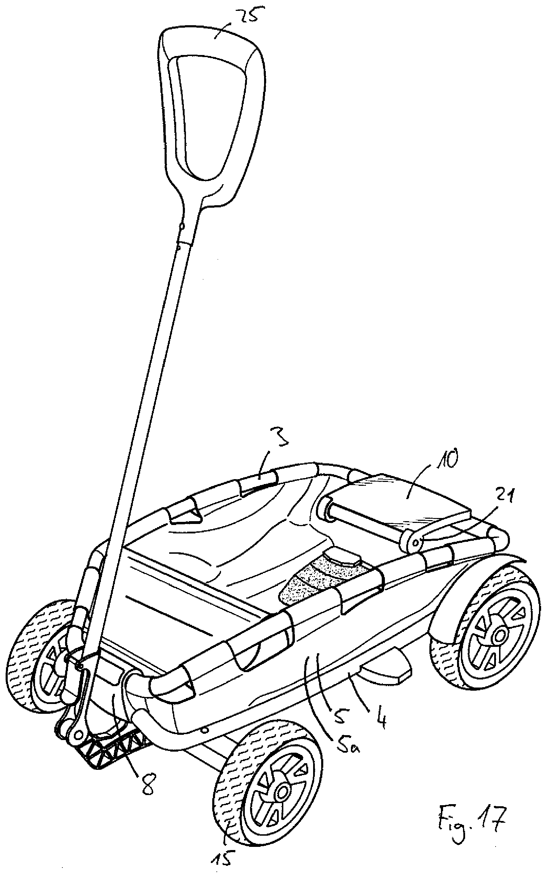

Wie in etwa der Vergleich der Figuren 1 und 17 zeigt, kann das Packmaß des Handwagens 100 verkleinert werden, indem der Oberrahmen 3 auf den Unterrahmen 4 zu bewegt wird, im Wege einer Verschwenkung. Die Verschwenkmöglichkeit des Oberrahmens 3 wird erreicht, indem dieser mithilfe eines an der Vorderseite 9 des Handwagens 100 angeordneten Gelenkstücks 8 mit dem Unterrahmen 4 verbunden ist, welches eine horizontale Querschwenkachse A bereitstellt (siehe Fig. 3).

Um den Oberrahmen 3 in der Betriebsstellung, in der sein hinterer Querbereich 3b von dem hinteren Querbereich 4b des Unterrahmens beabstandet ist, zu fixieren, ist zwischen den hinteren Bereichen des Oberrahmens 3 und Unterrahmens 4 eine Stütze 10 vorgesehen. Wie die Figuren 12 und 13 zeigen, ist die Stütze 10 kniegelenkig ausgeführt. Die untere Hälfte der Stütze weist zwei Gelenkvorsprünge 10a auf, die in zwei Gelenkausnehmungen 11c der Bodenplatte eingreifen (siehe Fig. 11 und 12). Die untere Hälfte der Stütze 10 ist mit der oberen Hälfte der Stütze 10 mittels zweier Scharnierkappen 21, von denen eine in Fig. 14 gezeigt ist, gelenkig verbunden.

Die Figuren 8 und 9 zeigen das Prinzip der Verkleinerung des Packmaßes. Wie Fig. 9 zeigt, weist der Unterrahmen 4 von der Seite betrachtet einen horizontalen Bereich M auf. Fig. 8 zeigt, dass der Oberrahmen 3 im Betriebszustand einen nahezu horizontalen Bereich K aufweist. Durch die geschickte Positionierung der Schwenkachse A, die horizontal und quer zur Längsrichtung L in etwa mittig zwischen den zumindest nahezu horizontalen Bereichen M, K des Oberrahmens 3 und des Unterrahmens 4 angeordnet ist und die Gestaltung des Oberrahmens 3 wird erreicht, dass im Betriebszustand ein großer Bereich B des Handwagens geschaffen ist, der eine ausreichende Mindesthöhe H3 aufweist. Diese Mindesthöhe H3 verhindert das Herausfallen von in dem Handwagen transportierten Gegenständen. Im hinteren Bereich des Wagens wird eine über die Mindesthöhe H3 hinausgehende Maximalhöhe H1 erreicht, die ein dort etwa sitzendes Kind schützt, indem beispielsweise verhindert ist, dass das Kind mit seinen Händen an die Hinterräder gelangen kann. Der an die Schwenkachse A angrenzende Bereich des Oberrahmens 3 steht nicht senkrecht, sondern ist als vorderer Schrägbereich 3c ausgebildet, der im Betriebszustand von der Seite betrachtet zur Horizontalen einen Winkel a von etwa 45 Grad einnimmt. Auf diese Weise wird durch die Rotation des Oberrahmens 3 auf den Unterrahmen 4 zu eine deutlich größere Verringerung der Maximalhöhe H2 im Verstauzustand erreicht. An den vorderen Schrägbereich 3c, der in einer Ebene verläuft, grenzt von der Seite betrachtet eine Krümmung 3d an. Deren Winkel ß kann in einem Bereich von 130 bis 170 Grad liegen und beträgt im gezeigten Ausführungsbeispiel etwa 150 Grad. Nach der Krümmung 3d geht der Oberrahmen 3 von der Seite betrachtet in eine Wölbung 3e über. Zwischen der Krümmung bei 3d und der Wölbung 3e kann ein kurzes gerades Stück 3f angeordnet sein.

Der Oberrahmen ist stets vollständig oberhalb des Unterrahmens angeordnet.

Der Unterrahmen 4 ist nicht verschwenkbar.

An der Deichsel 22 ist eine Deichsel-Rohraufnahme 23 schwenkbar gelagert. In dieser kann ein Deichsel-Zugrohr 24 lösbar eingebracht werden. Am Ende des Deichsel-Zugrohrs 24 ist ein Griff 25 angeordnet.

Es ist eine Feststellbremse vorgesehen, die ein seitlich vorstehendes Betätigungselement 26 umfasst, das mit dem Fuß betätigbar ist. Die Bremse umfasst des Weiteren einen federkraftbeaufschlagten Arretiermechanismus. Dieser weist Bremsstifte 26a auf, die beim Auslösen der Bremse federkraftbeaufschlagt in auf der Innenseite der Hinterräder 15 vorgesehene Vertiefungen 26b einrasten.

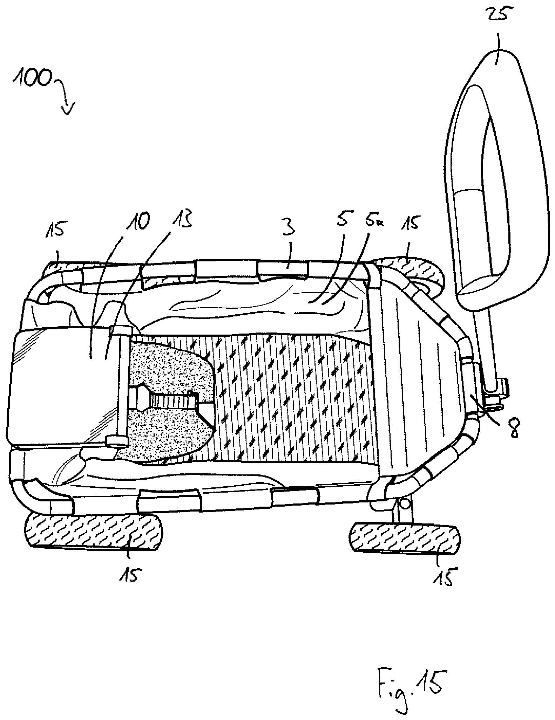

Während die Bespannung 5 im etwa in Fig. 1 gezeigten Betriebszustand des Handwagens zumindest nahezu gespannt ist, ist sie im etwa in Fig. 15 gezeigten Verstauzustand des Handwagens schlaff.

Sowohl die beiden seitlichen Enden des Vorderachsenträgers 17, als auch der Vorderachsenträger 17 im Bereich der Deichsel 22 sind mit Abstandsbegrenzern 27 versehen, die den Abstand zwischen beweglichen Teilen der Deichsel 22 und der Achsschenkel 16a zu den feststehenden Teilen auf ein solch geringes Maß begrenzen, dass mit Fingern nicht zwischen die beweglichen und feststehenden Teile hineingegriffen werden kann. Die Abstandsbegrenzer 27 bewirken daher einen zuverlässigen Verletzungsschutz.

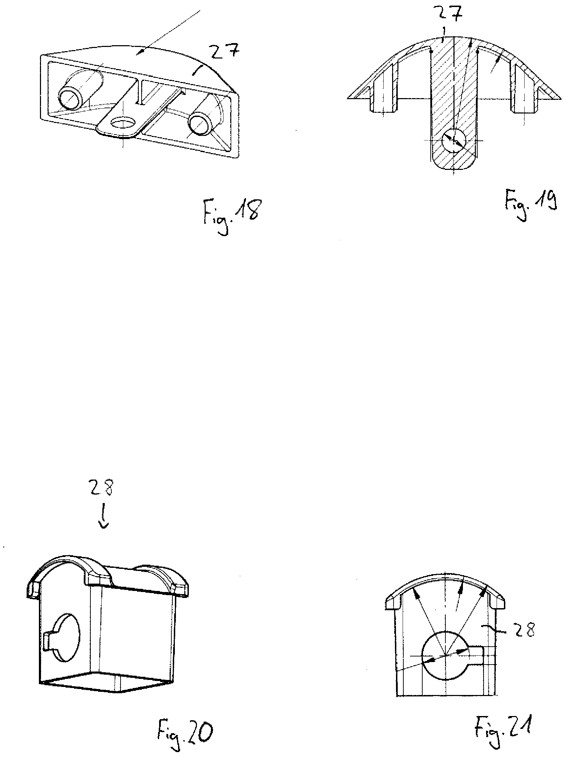

Der in den Figuren 18 und 19 gezeigte Abstandsbegrenzer 27 der Deichsel hat in etwa die Form eines Teils einer Scheibe, mit einer Dicke, die in etwa die Dicke des Vorderachsträgers 17 entspricht. Er stellt sicher, dass zwischen Deichsel 22 und Vorderachsträger 17 in keiner Stellung der Deichsel 22 genug Abstand besteht, dass ein Finger, insbesondere eines Kindes, Platz hätte.

Der in den Figuren 20 und 21 gezeigte Abstandsbegrenzer 28 der Achsschenkel hat einen quaderförmigen Abschnitt und einen abgerundeten Abschnitt. Mit dem quaderförmigen Abschnitt ist er in den Vorderachsträger 17 einsteckbar. Der abgerundete Abschnitt sorgt dafür, dass zwischen dem Achsschenkel 16a und dem Vorderachsträger 17 in keiner Stellung der Achsschenkel genug Abstand besteht, dass ein Finger, insbesondere eines Kindes, Platz hätte.

### Bezugszeichenliste:

- 100: Handwagen mit reduzierbarem Packmaß
- 1: Vorderachsenanordnung
- 2: Hinterachsenanordnung
- 2a: durchgehende Hinterachse
- 3: Oberrahmen
- 3a: vorderer Querbereich des Oberrahmens
- 3b: hinterer Querbereich des Oberrahmens
- 3c: vorderer Schrägbereich des Oberrahmens
- 3d: Krümmung des Oberrahmens
- 3e: Wölbung des Oberrahmens
- 4: Unterrahmen
- 4a: vorderer Querbereich des Unterrahmens
- 4b: hinterer Querbereich des Unterrahmens
- 4c: Traverse
- 5: Wandung
- 5a: Bespannung
- 6, 7: Rohrschleife
- 8: Gelenkstück
- 8a: Gelenkstückkappe
- 9: Vorderseite des Wagens
- 10: Stütze
- 10a: Gelenkvorsprünge
- 11: Bodenplatte
- 11a: vordere Hälfte der Bodenplatte
- 11b: hintere Hälfte der Bodenplatte
- 11c: Gelenkausnehmungen der Bodenplatte
- 12: Sitzfläche
- 13: Rückenlehne
- 14: Schlaufen
- 15: Räder
- 16: Vorderachsen
- 16a: Achsschenkel
- 17: Vorderachsenträger
- 18: Spurstange
- 19: Lenkhebel
- 20: Lenklager
- 21: Scharnierkappe
- 22: Deichsel
- 23: Deichselrohraufnahme
- 24: Deichsel-Zugrohr
- 25: Griff
- 26: Bremsbetätigungselement
- 26a: Bremsstift
- 26b: Vertiefungen
- 27: Deichsel-Abstandsbegrenzer
- 28: Achsschenkel-Abstandsbegrenzer

- A: Schwenkachse
- L: Längsrichtung des Handwagens
- α, ß: Winkel
- B: Bereich des Handwagens mit ausreichender Höhe
- G: Gesamtlänge des Aufbaus des Handwagens
- H1, H2, H3: Höhen
- K: nahezu horizontaler Bereich des Oberrahmens
- M: horizontaler Bereich des Unterrahmens

## Patentansprüche

1. Handwagen mit verkleinerbarem Packmaß (100), insbesondere zum Transport von Kindern, mit einer Vorderachsanordnung (1) und einer Hinterachsanordnung (2), wobei ein Oberrahmen (3) und ein Unterrahmen (4) sowie eine zwischen diesen Rahmen angeordnete Wandung (5) vorgesehen ist, und das Packmaß dadurch verkleinerbar ist, dass der Oberrahmen (3) auf den Unterrahmen (4) zu bewegbar ist, wobei der Oberrahmen (3) ausschließlich durch eine rotatorische Bewegung auf den Unterrahmen (4) zu bewegbar ist und die Schwenkachse (A), um die der Oberrahmen (3) auf den Unterrahmen (4) zu verschwenkbar ist, an der Vorderseite des Handwagens (100) angeordnet ist, **dadurch gekennzeichnet, dass** die Wandung (5) eine zwischen dem Oberrahmen (3) und dem Unterrahmen (4) spannbare Bespannung (5a) umfasst, wobei der Oberrahmen (3) eine zumindest nahezu geschlossene Rohrschleife (6) umfasst.

2. Handwagen nach Anspruch 1, **dadurch gekennzeichnet, dass** der Unterrahmen (4) die gesamte Stabilität bereitstellt, wobei an dem Unterrahmen (4) die Vorderachsanordnung (1) und die Hinterachsanordnung (2) befestigt sind.

3. Handwagen nach Anspruch 1 oder 2, **dadurch gekennzeichnet, dass** der Unterrahmen (4) eine zumindest nahezu geschlossene Rohrschleife (7) umfasst.

4. Handwagen nach einem der Ansprüche 1 bis 3, **dadurch gekennzeichnet, dass** mithilfe eines im vorderen Querbereich (4a) des Unterrahmens (4) angeordneten Gelenkstücks (8) oberhalb des Unterrahmens (4) der Oberrahmen (3) befestigt ist und der Oberrahmen (3) relativ zu dem Unterrahmen (4) um eine horizontale Schwenkachse (A) verschwenkbar ist, die durch das Gelenkstück (8) verläuft.

5. Handwagen nach einem der Ansprüche 1 bis 4, **dadurch gekennzeichnet, dass** der Oberrahmen (3) an seinem hinteren Querbereich (3a) mittels einer Stütze (10) mittelbar oder unmittelbar an dem Unterrahmen (4) befestigt ist.

6. Handwagen nach Anspruch 5, **dadurch gekennzeichnet, dass** an dem Unterrahmen (4) eine Bodenplatte (11) befestigt ist und im hinteren Bereich der Bodenplatte (11) eine Sitzfläche (12) vorgesehen ist, die an die Stütze (10) angrenzt und die Stütze (10) eine Rückenlehne (13) bildet.

7. Handwagen nach einem der Ansprüche 1 bis 6, **dadurch gekennzeichnet, dass** die Bespannung Schlaufen (14) aufweist, mittels derer sie an dem Oberrahmen (3) und/oder dem Unterrahmen (4) befestigt ist.

8. Handwagen nach einem der Ansprüche 1 bis 7, **dadurch gekennzeichnet, dass** im vorderen Bereich des Oberrahmens (3) eine Tasche lösbar befestigbar ist.

9. Handwagen nach einem der Ansprüche 1 bis 8, **dadurch gekennzeichnet, dass** der Handwagen vier Räder (15) aufweist und eine Achsschenkellenkung vorgesehen ist und der Oberrahmen (3) mit dem Unterrahmen (4) unlösbar verbunden ist.

10. Handwagen nach einem der Ansprüche 1 bis 9, **dadurch gekennzeichnet, dass** Deichsel-Abstandsbegrenzer (27) und Achsschenkel-Abstandsbegrenzer (28) vorgesehen sind.

11. Handwagen nach einem der Ansprüche 1 bis 10, **dadurch gekennzeichnet, dass** in dem Handwagen eine Sitzfläche (12) für ein Kind vorgesehen ist und auf dieser Sitzfläche abnehmbare Sitzpolster vorgesehen sind und abnehmbare Gurte vorgesehen sind, zum Sichern eines Kindes und der Handwagen eine Feststellbremse aufweist.

## Claims

1. Handcart with reducible pack size (100), particularly for transporting children, having a front axle arrangement (1) and a rear axle arrangement (2), wherein a top frame (3) and a bottom frame (4) as well as a wall (5) arranged between these frames if provided, and the pack size is reducible in that the top frame (3) is movable toward the bottom frame (4), wherein the top frame (3) is movable toward the bottom frame (4) exclusively by means of a rotatory movement, and the pivot axis (A), around which the top frame (3) is pivotable toward the bottom frame (4), is arranged on the front side of the handcart (100), **characterized in that** the wall (5) comprises a tensible covering (5a) between the top frame (3) and the bottom frame (4), wherein the top frame (3) comprises an at least almost closed pipe loop (6).

2. Handcart according to claim 1, **characterized in that** the bottom frame (4) provides the entire stability, wherein the front axle arrangement (1) and the rear axle arrangement (2) are attached to the bottom frame (4).

3. Handcart according to claim 1 or 2, **characterized in that** the bottom frame (4) comprises an at least almost closed pipe loop (7).

4. Handcart according to one of the claims 1 to 3, **characterized in that** the top frame (3) is attached above the bottom frame (4) by means of an articulation piece (8) arranged in the front transverse area (4a) of the bottom frame (4), and the top frame (3) is pivotable relative to the bottom frame (4) around a horizontal pivot axis (A) which runs through the articulation piece (8).

5. Handcart according to one of the claims 1 to 4, **characterized in that** the top frame (3) at its rear transverse area (3a) is attached indirectly or directly to the bottom frame (4) by means of a support (10).

6. Handcart according to claim 5, **characterized in that** a floor plate (11) is attached to the bottom frame (4), and a seating surface (12) is provided in the rear area of the floor plate (11), said seating surface (12) adjoining the support (10), and the support (10) forming a backrest (13).

7. Handcart according to one of the claims 1 to 6, **characterized in that** the covering comprises loops (14), by means of which it is attached to the top frame (3) and/or the bottom frame (4).

8. Handcart according to one of the claims 1 to 7, **characterized in that** a bag is detachably fastened to the front area of the top frame (3).

9. Handcart according to one of the claims 1 to 8, **characterized in that** the handcart comprises four wheels (15) and an Ackerman steering is provided, and the top frame (3) is undetachably connected to the bottom frame (4).

10. Handcart according to one of the claims 1 to 9, **characterized in that** towing bar spacing delimiters (27) and steering knuckle spacing delimiters (28) are provided.

11. Handcart according to one of the claims 1 to 10, **characterized in that** a seating surface (12) for a child is provided in the handcart, and detachable seat cushions are provided on said seating surface, and detachable seat belts for securing a child are provided, and the handcart comprises a locking brake.

## Revendications

1. Charrette de dimension réduite (100), en particulier pour le transport d'enfants, comportant un agencement d'essieu avant (1) et un agencement d'essieu arrière (2), dans lequel un cadre supérieur (3) et un cadre inférieur (4) ainsi qu'une paroi (5) agencée entre ces cadres sont prévus, et la dimension est réduite par le fait que le cadre supérieur (3) peut être déplacé sur le cadre inférieur (4), dans laquelle le cadre supérieur (3) peut être déplacé exclusivement par un mouvement de rotation sur le cadre inférieur (4), et l'axe de pivotement (A) autour duquel le cadre supérieur (3) peut pivoter sur le cadre inférieur (4) est agencé sur le côté avant de la charrette (100), **caractérisé en ce que**
la paroi (5) comprend un habillage (5a) pouvant être tendu entre le cadre supérieur (3) et le cadre inférieur (4), dans lequel le cadre supérieur (3) comprend une boucle tubulaire (6) au moins pratiquement fermée.

2. Charrette selon la revendication 1, **caractérisée en ce que** le cadre inférieur (4) assure la stabilité complète, dans laquelle l'agencement d'essieu avant (1) et l'agencement d'essieu arrière (2) sont fixés au cadre inférieur (4).

3. Charrette selon la revendication 1 ou 2, **caractérisée en ce que** le cadre inférieur (4) comprend une boucle tubulaire (7) au moins pratiquement fermée.

4. Charrette selon l'une des revendications 1 à 3, **caractérisée en ce que**, à l'aide d'une pièce d'articulation (8) agencée dans la zone transversale avant (4a) du cadre inférieur (4), au-dessus du cadre inférieur (4), le cadre supérieur (3) est fixé et le cadre supérieur (3) peut pivoter par rapport au cadre inférieur (4) autour d'un axe de pivotement horizontal (A) qui passe par la pièce d'articulation (8).

5. Charrette selon l'une des revendications 1 à 4, **caractérisée en ce que** le cadre supérieur (3) est fixé sur sa zone transversale arrière (3a) au moyen d'un support (10) fixé indirectement ou directement au cadre inférieur (4).

6. Charrette selon la revendication 5, **caractérisée en ce que**, sur le cadre inférieur (4) est fixée une plaque de fond (11) et dans la zone arrière de la plaque de fond (11) est prévue une surface d'assise (12) qui jouxte le support (10) et le support (10) forme un dossier (13).

7. Charrette selon l'une des revendications 1 à 6, **caractérisée en ce que** l'habillage présente des boucles (14) au moyen desquelles il peut être fixé au cadre supérieur (3) et/ou au cadre inférieur (4).

8. Charrette selon l'une des revendications 1 à 7, **caractérisée en ce que**, dans la zone avant du cadre supérieur (3) est fixé un sac pouvant être détaché.

9. Charrette selon l'une des revendications 1 à 8, **caractérisée en ce que** la charrette présente quatre roues (15) et une direction à fusée est prévue et le cadre supérieur (3) est relié au cadre inférieur (4) de façon non détachable.

10. Charrette selon l'une des revendications 1 à 9, **caractérisée en ce que** des limiteurs d'écartement de la barre de traction (27) et des limiteurs d'écartement de fusée d'essieu (28) sont prévus.

11. Charrette selon l'une des revendications 1 à 10, **caractérisée en ce que**, dans la charrette est prévue une surface d'assise (12) pour un enfant et sur cette surface d'assise sont prévus des coussins de siège amovibles et des sangles amovibles sont prévues pour attacher un enfant et la charrette présente un frein d'arrêt.
